# EUROPEAN PATENT APPLICATION

(11) **EP 4 838 381 A1**
(43) Date of publication of application: **11.11.2026**
(21) Application number: 25175171.5
(22) Date of filing: 08.05.2025
(51) Int. Cl.: G06F 16/36, G06N 3/042, G06N 5/022

(54) **METHOD FOR ASSIGNING A SEMANTIC CONCEPT TO A PREVIOUSLY UNSEEN DATA ASSET**

(71) Applicant: Robert Bosch GmbH, 70442 Stuttgart (DE)
(72) Inventor: Schmid, Stefan, 71332 Waiblingen (DE); Halilaj, Lavdim, 71229 Leonberg (DE); Tan, Yi, 71642 Ludwigsburg (DE)

(57) **Abstract**

A computer-implemented method assigns a semantic concept to a new data asset by: enriching (1) the data assets metadata *I* (tokenizing labels (A1), expanding acronyms (A2), leveraging (A3) a knowledge graph (11)/databases (14), generating descriptions (A4)); retrieving (2) candidate concepts and similarity scores via, e.g., vector database (13) searches comparing enriched metadata embeddings with concept descriptor embeddings; determining (3) a first ranking based on similarity scores; determining (4) at least a second ranking using a neural network (12b) processing the first ranking and enriched metadata; and storing a proposed mapping (*O*) based on at least the second ranking in a knowledge graph (11).

## Description

### Technical field

The invention relates to a computer implemented method for assigning a semantic concept to a previously unseen data asset, a corresponding data processing system, a computer program, and a machine-readable storage medium.

### Prior art

A major challenge for enterprise data management and data-driven applications is data harmonization and integration. Data owners and system developers often use custom schemas for naming and storing data. This prevents data-driven applications (e.g., root cause analysis tools) and reusable software agents from easily processing and leveraging the data. Currently, data engineers build custom adapters or data integration pipelines for each data source, which is costly and time-consuming when integrating new sources.

### Disclosure of the invention

According to a first aspect, the invention relates to a computer-implemented method for assigning a semantic concept to a new, i.e. previously unseen data asset. The data asset comprises metadata. Thereby, the metadata comprise at least a data asset label. The method comprises the following steps. In a method step, enriched metadata a determined by performing at least one enrichment operation. A latter enrichment operation comprises at least one of:
- tokenizing the data asset label,
- expanding acronyms in the metadata. Expanding acronyms in the metadata may be understood as expanding the data asset label into known, human and/or machine readable and understandable names based on known acronyms. An acronym contained in the data asset label may be expanded by reference to an acronym-to-expression mapping stored in the knowledge graph. In other words, expansion of acronyms may be performed based on prior knowledge, i.e. short-text (acronym) to long-text mappings that are preferably stored in the knowledge graph. Generally, an acronym may be understood as an abbreviation formed from (the initial) components in a word or a group of words.

- deriving known assignments between (known) data assets and semantic concepts from a knowledge graph and/or external databases (e.g., expansions of acronyms (short-text to long-text) may be automatically extracted from known mappings - e.g. already comprised in the knowledge graph - and such expansions of acronyms may also be used for new mappings requests). In other words, context for the data asset may be derived from prior mappings stored, e.g. in the knowledge graph (e.g., the fact that a data asset belongs to the same container - e.g. a column to a table - can be used to extract, e.g., the data domain as it can be assumed that data assets in the same table belong to the same data domain). Alternatively, or in addition, missing information on the data asset may be obtained from vendor documentations, and a Web search.
- generating a textual description of the data asset, the textual description comprising a predefined limited number of words or characters. Such textual description of the data asset may be determined by providing, e.g., a large language model - i.e. a neural network for natural language processing - as an input the derived known assignments between (known) data assets and semantic concepts from a knowledge graph and/or external databases together with the data asset metadata. Additionally, the neural network may be prompted to generate a textual description of the data asset based on the provided input. The neural network may then determine a textual description of the data asset as an output.

An enrichment operation may comprise one or several of these aforementioned separate sub-operations. Each one of these separate sub-operations may, e.g., be performed by a separate agent, i.e. a separate software program.

In a next step, a plurality of candidate semantic concepts may be retrieved, preferably with corresponding similarity scores. In this context, a similarity score may provide a measure for the similarity between a candidate semantic concept and the/a specific part (e.g.: label, textual description, etc.) of the metadata, wherein, e.g., a weighted similarity score may be a real number between 0 and 1; higher scores may indicate greater similarity. Retrieving candidate semantic concepts and determining corresponding similarity scores may be done by performing at least one similarity search. For instance, as an efficient method for a similarity search, Approximate Nearest Neighbors Search may be performed. Within the similarity search, text embeddings of the enriched metadata may be compared with (a plurality of) text embeddings of candidate semantic-concept descriptors. (The plurality of) candidate semantic concepts may be retrieved, e.g., from a vector database, wherein text embeddings of candidate semantic-concepts descriptors may be stored in the vector database. In a next step a first ranking of the candidate semantic concepts may be determined, based on at least the similarity scores of the at least one similarity search. Generally, candidate semantic concepts with higher scores may be higher ranked in a ranking. Subsequently, at least one second ranking of the candidate semantic concepts may be determined by at least one neural network configured for natural language processing. The at least one neural network may receive, as input, the first ranking together with the enriched metadata and determines a second ranking as output. In a next step, at least one semantic concept may be selected based on the second ranking and the combination of the data asset and the at least one selected semantic concept may be stored as a proposed mapping in the knowledge graph. Alternatively, several semantic concepts may be selected and the several respective combinations of semantic concept and the data asset - i.e. the several mappings - may be stored in the knowledge graph. In a re-iteration of the above - and below - described method steps for assigning a semantic concepts to (another) new/unseen data asset, the selected mapping(s) or, generally, mappings with a high confidence by the algorithm (alternatively or in addition: a manual approval by a user) that have been stored in the knowledge graph may be used to improve the new/future assignments.

Advantageously, the proposed method replaces the manual and costly creation of data mappings with an automated, dynamic approach. This enables faster integration of new data sources - for instance, new sensors or machines on a manufacturing line - into applications like a root-cause analysis/monitoring system. If the application is configured to handle the new data asset, manual data mapping is eliminated. The proposed method automatically provides the necessary semantic concept, allowing the application to integrate the new data into its calculations for surveillance, root-cause analysis, and/or anomaly detection.

In addition, the proposed invention can be used in any dynamic data-driven system or data management context, where data assets with different data schemas need to be aligned/harmonized or integrated according to a standard data model or semantic data model. Traditionally, this requires data engineers/data stewards to develop custom adapters or mappings manually - which can be a very time intensive and costly effort in complex systems. The method proposed herein supports fully automated data-to-semantic mappings in soft real-time, i.e. order of seconds, in support of dynamic data-driven systems and applications.

Preferably, the metadata of the asset further - in addition to the data asset label - comprise information comprising at least one of an asset type, a textual description of the asset, a data type of the asset, a data source, a data application, a data domain. An asset type may, e.g., be a column, table or an attribute. A data source, i.e. the location where the data assets may be stored, may, e.g., be RDBMS or Data Lake, and an example for a data application - the IT application from which the data assets where originally created - may be SAP. The aforementioned information related to a data application may be used, for example, to find a description of the data asset within embedded vendor documentations, or via a Web search (online data base search).

Data assets and also semantic concepts may often be associated with a data domain (e.g. manufacturing, engineering, sales, ...). This information on the data domain may be used to constrain the search space for semantic concepts - as these may optionally be associated with a data domain.

Advantageously, providing more metadata information transforms the mapping process from a label (i.e. keyword)-based approach to a context-aware approach, resulting in significantly improved accuracy, efficiency, and robustness.

Preferably, depending on the additional information comprised/provided in the metadata as described above, a separate similarity search with corresponding similarity score determination may be performed, respectively, for data asset label similarity, textual description similarity, contextual correspondence of the semantic concept. In this context, contextual correspondence of the semantic concepts may be determined, e.g., with a derived data domain of the semantic concept. E.g., contextual correspondence may determine how well the identified semantic concept matches the context derived from the metadata's additional information.

Advantageously, by performing separate similarity searches according to the available metadata information, i.e. meta data aspects, one may assign different weights to each aspect. For example, the textual description might be more informative than the label - or the other way around -, and the corresponding similarity score could be given a higher weight.

Preferably, the textual description of the data asset may be determined based on at least one of documentation of the data asset and/or the application that provides the data asset, with the documentation being provided in form of unstructured data in a vector database. Alternatively, or in addition, the textual description of the data asset may be determined based on a search of information in an online database.

Preferably, at least one of relevance scores and maturity scores are determined in addition to the similarity scores. Thereby, a relevance score may be determined using semantic concept metadata by comparing - e.g. using text embeddings and an appropriate similarity measure - the semantic concept metadata of a candidate semantic concept to the data asset metadata and assigning a higher relevance score to a candidate semantic concept candidate when a data domain associated with the data asset matches a data domain associated with the candidate semantic concept and/or a semantic concept type associated with the data asset matches a semantic concept type associated with the candidate semantic concept. In other words, the relevance score may be determined by matching if a potential semantic concept matches the data domain of the asset, and/or the semantic concept type (e.g. class, property) matches the data asset type (e.g. column or attribute), wherein semantic concept candidates with a higher relevance will obtain a higher relevance score.

Likewise, a maturity score may be determined based on semantic concept metadata related to (a) a registration status of the candidate semantic concept, wherein a more advanced registration status determines a higher maturity score; or (b) a scope of usage of the candidate semantic concept, wherein a broader scope of usage results in/determines a higher maturity score; wherein the scope of usage is determined based on at least one of: (i) an organizational level at which the potential semantic concept was suggested, wherein a higher organizational level results in a broader scope of usage; or (ii) a standardization status of the candidate semantic concept, wherein a standardized semantic concept has a broader scope of usage than a non-standardized semantic concept.

In other words, candidate semantic concepts may obtain a maturity score based on their registration status (e.g. candidate, qualified, proposed standard, ...) and the scope of the ontology/glossary/taxonomy (low = suggested by individual users / departments, medium = suggested by divisions / domains, high = suggested by company-wide standardization teams). Semantic concept candidates with a higher maturity will obtain a higher maturity score. Generally, the maturity score may indicate, how formalized and widely adopted the concept is.

Preferably, the candidate semantic concepts may be ranked in the respective rankings by determining a weighted combination of the determined - potentially separate, depending on the aspects covered in the metadata - similarity scores and, optionally, the optionally determined relevance scores and/or maturity scores. The weights in the weighted combination may be predefined.

Advantageously, a weighted combination may allow balancing different contributing aspects - like, e.g. data asset label information and a description of the data asset. This may, on the other hand, also allow prioritization contributions that may be known, e.g. from former assignments of semantic concepts to data assets, to be particularly relevant.

Preferably, before a proposed mapping is selected, an additional neural network for natural language processing may be provided with the at least one second raking and the enriched metadata. Further a text instruction comprising instructions to the additional neural network for evaluating and potentially reordering the ranking of semantic concepts as provided by the second ranking may be provided to the additional neural network, as additional input. The additional neural network may then determine a third ranking based on the input. The proposed mapping - to be stored in the knowledge - may then be selected based on at least the third ranking.

Advantageously, the additional neural network may perform more complex reasoning using the enriched metadata and the initial ranking as context. It may consider relationships between concepts, domain-specific knowledge, and even the nuances of language used in the descriptions. Providing the neural network with instructions to evaluate the initial ranking, it may perform a form of "self-reflection" or validation. It may identify potential errors or inconsistencies in the initial ranking and correct them. For example, it might detect that two highly similar concepts are ranked far apart due to a quirk in the similarity measure and adjust their ranking accordingly.

Preferably, a semantic concept may be added to the first, second or third ranking if a respective overall score exceeds a respective predefined threshold. The respective overall score may be determined based on the similarity scores and, optionally, the relevance and/or maturity scores. Additionally, a respective maximum number of semantic concepts to be comprised in the first, second or third ranking, respectively, may be predefined. Advantageously, this may act as a filter, progressively refining the selection of candidate semantic concepts by progressively removing less relevant concepts in the subsequent ranking. This approach with several rankings allows for a more thorough exploration of the candidate semantic concepts while ensuring that the respective later ranking - second or third - is more relevant and less cluttered with noise.

Preferably, the method may further comprise the step of determining at least one overall ranking of the candidate semantic concepts. The overall ranking may be determined by a weighted combination of all previously determined scores, comprising the similarity scores, relevance score and maturity score, and based on the previously determined rankings, i.e. the first, second and third ranking, if the respective ranking has been determined. The proposed mapping - to be stored in the knowledge - may then be selected based on the overall ranking.

Preferably, the method may further comprise the following steps: in a further step, the proposed/one mapping out of the proposed mappings (e.g. the highest ranked candidate semantic concept, according to the first, second, third or overall ranking, together with the data asset) may be provided to an IT application. The IT application may, e.g. be a root-cause analysis or anomaly detection software program in a production line in manufacturing. The IT application may be configured to process data assets according to (the meaning of) the associated semantic concept. In this context, the data asset may comprise data of a new sensor or new data source added to a IT system (e.g. in a production line), wherein the IT application controls the IT system by performing an action (e.g. raise an alarm) or taking a decision (e.g. to scrap a produced part).

Advantageously, these additional steps may enable real-time adaptation and automation in manufacturing by rapidly integrating new data sources (sensors, machines) into production line applications, particularly for root-cause analysis and anomaly detection. Data may be processed on-the-fly, such that the application may gain immediate insights. This may enable faster anomaly detection, root cause identification, and automated adjustments, which may minimize downtimes and may improves flexibility.

According to a further aspect, the invention relates to a data processing system comprising a processor configured to perform a method as described herein.

According to a further aspect, the invention relates to a computer program comprising machine-readable instructions, which, when the program is executed by a computer, cause the computer to carry out one of the computer-implemented methods described above and below. Furthermore, according to another aspect, the invention relates to a machine-readable storage medium, on which the above computer program is stored.

Embodiments of the invention will be discussed with reference to the following figures in more detail. The figures show:
Figure 1 a flow chart of an exemplary embodiment;
Figure 2 a flow chart of an exemplary embodiment;

### Description of the embodiments

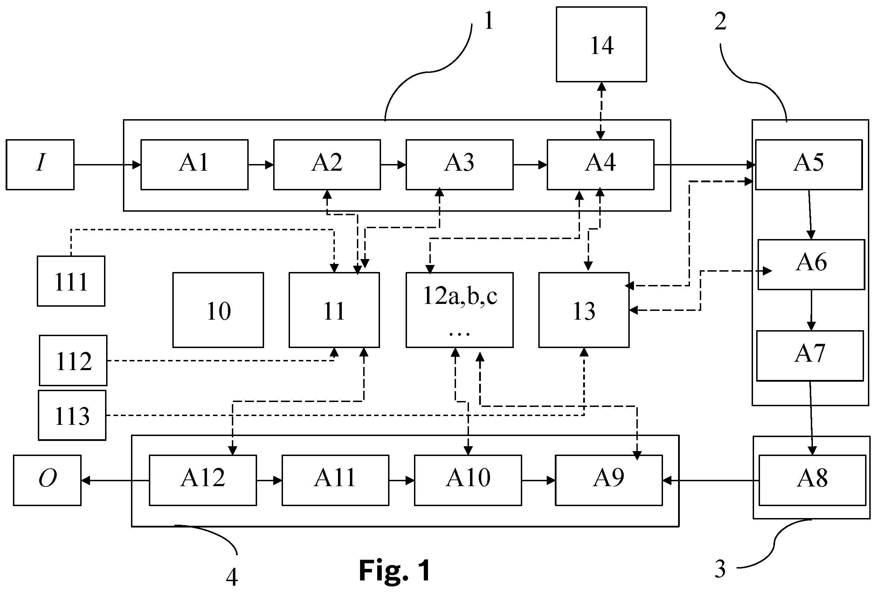

Figure 1 shows an exemplary embodiment of a method 1000 for assigning a semantic concept to a previously unseen/unknown/new data asset. The flow chart illustrates the information passing between different agents, i.e. software program parts. The initial input, *I*, comprises the new data asset's metadata. Generally, metadata of a data asset may also be understood as a description of the data asset (e.g., sensor data). Such metadata may consist of a
- A label (e.g., MATNR), and further, optionally
- A type (e.g., Column, Table, Attribute, Object...)
- A description (e.g., "Material number of ...")
- A Data Type + Samples (e.g., xsd:string)
- Context (e.g., Data Source = SAP_1, container = MAST, data application, data fields, data domain of the asset, ...)

The method determines as an output, O, a proposed mapping linking a data asset (e.g., by label) to a semantic concept (e.g., a uri). As a non-limiting example, the data asset label "MATN R" may be mapped to "http:// company.com/man-core-ont/MaterialNumber". It should be noted that, generally, a semantic concept may be simply a vocabulary (e.g., glossary term), a taxonomy concept or a data model entity.

In a first step or phase 1, in figure 1, the input data *I* are enriched by at least one enrichment operation, depending on the available/provided metadata in *I*. Agent A1 may perform label tokenization by transforming the data asset labels into individual tokens. As an example, the data asset label 'Prdld' could be transformed into tokens 'prd' and 'id'. Similarly, 'MATNR' could be tokenized into 'mat' 'nr'. Agent A2 may perform a token expansion by transforming tokens - obtained as an output of agent A1 - into more meaningful/human- or machine understandable labels based on known acronyms stored, e.g. in knowledge 11 graph. Agent A2 may, to this end, retrieve information from knowledge graph 11 that stores prior knowledge in form of already known mappings (previously proposed and, optionally, approved by e.g. a human user) as well as domain knowledge in form of known acronyms and/or acronym expansions 111 and data asset descriptions 112. For instance, A2 may receive the tokenized output 'prd id' of A1 as input and may transform this into 'product identifier'. Optionally, agent A3 may derive/query missing context information in knowledge graph 11 from known, related mappings already stored in the knowledge graph 11. For example, a data asset mapping for the container asset could reveal the data domain or data source of a data asset.

Further, optionally, agent A4 may generate descriptions in cases where no meaningful description of the data asset is provided in the input data *I*. To this end, A4 may attempt to retrieve/obtain:
known description for the given data asset from knowledge graph 11 information about the data asset from another external data base, such as an online information source/online accessible data base 14, based on the data asset label, and - if available, the type and optional context,
information about the data asset in available vendor documentations 113 by using a similarity search based on the data asset label and a vector database 13 comprising vendor documentations 113 of the respective data application.

Thereby, generally, the aforementioned vector database 13 may store text embeddings of various kinds (e.g., semantic concept labels and descriptions) in different indexes and may thereby enables the agents to find similar concepts based on a data asset label or description.

A semantic concept repository 10 may be provided, comprising glossaries, taxonomies and ontologies; embeddings of sematic concepts names and corresponding descriptions from the semantic concept repository 10 may, e.g., be stored in vector database 13.

Finally, agent A4 may prompt a neural network 12a for natural language processing (i.e., an LLM) in a RAG-style by providing the apriori obtained information to the neural network. The task for the neural network 12a would then be to generate a meaningful and concice description for the data asset, given the apriori obtained information. In case the neural network's confidence for the description is high, the generated description may also be stored in the knowledge graph for future use. It may be noted that the contribution of agent A4 may be particularly important, as a meaningful description of the data asset - if not provided as part of the input *I* - may be important for increasing chances of finding the target semantic concepts.

As an output of phase 1, enriched metadata are obtained.

In a second step, or phase 2, a plurality of candidate semantic concepts may be retrieved/determined from the vector data base, together with corresponding similarity scores by performing at least one similarity search that compares text embeddings of the enriched metadata with text embeddings of candidate semantic-concept descriptors stored in the vector database.

To this end, agent A5 may determine similar semantic concepts based on the data asset's label and context by embedding the data asset label and performing a similarity search on the vector data base's 13 index for semantic concept names (i.e., labels). Labels that are semantically more similar may thereby obtain a higher similarity score. In order to limit/restrict/reduce the number of concepts, the search may take the top X (e.g., 100-500) concepts, but may also use a minimum similarity threshold (i.e. discard semantic concepts with similarity score below a predefined threshold value). Additionally, to reduce the search space in the index, reliable context information about the data asset (e.g., the semantic concept type if known) may be used as filters in the similarity search. This may increase the chance of filtering out false positive candidates.

Further, agent A6 may retrieve similar semantic concepts based on the description and context derived in phase 1. Agent A6 may perform a similarity search based on the data asset description obtained by agent A4, by taking into account also the context information provided. Similarly to agent A5, agent A6 may take here only the top X (e.g., 100-500) concepts identified in the search, and may additionally use a minimum similarity threshold.

Further agent A7 may, optionally, score semantic concepts based on relevance and maturity. Based on the semantic concept metadata, e.g., semantic concepts with a matching data domain or expected concept type may obtain a higher relevance score. Similarly, based on the semantic concept metadata, e.g., a semantic concept with higher maturity (based on registration status and collection scope, e.g., application, domain, core) may obtain a higher maturity score.

Accordingly, the output of phase 2 is a collection of semantic concepts with corresponding similarity and - optionally - relevance and/or maturity scores. It may be noted that in phase 2, only one or two of the agents A5, A6, A7 may be used, i.e. in different embodiments, not every agent may be used. Accordingly, in different embodiments, semantic concepts and corresponding (similarity) scores may, e.g. only be determined based on a label similarity search by agent A5.

In phase 3, a first ranking of the candidate semantic concepts - as obtained as output of phase 2 - is obtained as output based on at least the similarity scores of the at least one similarity search in phase 2. To this end, agent A8 may combine the scores determined in phase 2, based on pre-configured weights per scoring metric or agent. Thereby, agent A6 may compute interim scores for a final selection of the semantic concepts and determine the first ranking from the interim scores. Agent A6 may, in particular, select/further reduce the number of candidate semantic concepts to e.g. 50 - 100 concepts by taking only the top 50 - 100 concepts and/or concepts with interim scores above a predefined threshold. For instance, given scores s1, s2, and s3 for a given candidate semantic concept from phase 2, an interim score sᵢₙₜ for this semantic concept may be determined as sᵢₙₜ=AVG(w1*s1 +w2*s2+w3*s3), wherein AVG denotes an averaging operation and wi denote predefined weights weighting the different contributions of the scores from the agents in phase 2.

In phase 4, at least one second ranking of the candidate semantic concepts is determined by at least one neural network 12b configured for natural language processing. The at least one neural network 12b receives as input the first ranking - the output from phase 3 - together with the enriched metadata and determines a second ranking as output.

In this phase 4, agent A9 may prompt one or several (e.g., three) neural networks 12b for language processing (e.g., by additionally using different prompting strategies) to request the neutral networks 12b to generate a second ranking for the selected semantic concept candidates based on the first ranking. To this end, the agent 9 may provide, in a RAG ("retrieval augmented generation") style all information about the input data asset and the selected semantic concept candidates as determined in phases 1 - 4 in the prompt for the at least one or the several neural networks 12b. This may be done similar as for agent 8.

Optionally, few-short learning techniques based on realistic examples for the task in the prompt may be used for each of the neural networks 12b. For each neural network that is prompted, agent A9 may translate the respective ranking of the semantic concepts into a score for each semantic concept (e.g., a score between 0-100).

Optionally, in phase 4, agent A10 may be used for generating an LLM-based re-ranking, using self-reflection prompts. To this end, agent A10 may take the second ranking(s) of agent A9 as an input and provides this ranking(s) as input to one or more additional (different) neural networks 12c (i.e. here: LLMs) with the input text prompt to reflect on the ranking results (given the same input as agent A9 and its results). For example, this may again result in a semantic concept score between 0-100 obtained as output from each of the additional neural networks 12c. Accordingly, a third ranking may be obtained from A10 based on the LLM re-ranking (as a result of the self-reflection prompt provided to LLM 12c).

Agent A11 may receive the output of at least one of agents A9 and A10 and may compute an overall score for each of the selected semantic concepts. To this end, agent A11 may use the scores from all available scoring metrics. While the scoring function may be the same as in case of agent A8, agent A11 may use the metrics from agent A9 (one per neural network) and agent A10 (also one per neural network). It is worth to note that a different set of pre-configured weights might be used - compared to agent A8. After computing the overall score for each candidate semantic concept, the top 5-10 scoring concepts may be selected in order to further reduce the number of candidate semantic concepts and an overall ranking may be determined based on the selected candidate semantic concepts together with their scoring as determined by agent A11. The overall score obtained from agent A11 may then be used to determine an overall ranking of the candidate semantic concepts.

In a further step, by agent A12 at least one semantic concept may be selected as proposed mapping, based on the overall ranking received as output from A11. The at least one proposed mapping may then be stored in the knowledge graph for future reference. One the one hand this may provide a way for future requests to provide an immediate answer - without having to recompute all the scores. On the other hand, the proposed mappings and their data asset information, may also be used to improve new/similar mapping requests.

Optionally, final output O may be a list of proposed mappings, optionally also including the overall score as determined by agent A11. This may additionally allow a user to judge how reliable a proposed mapping may be. Whereas mappings above a certain threshold may be very likely correct, mappings below they should only be used with care.

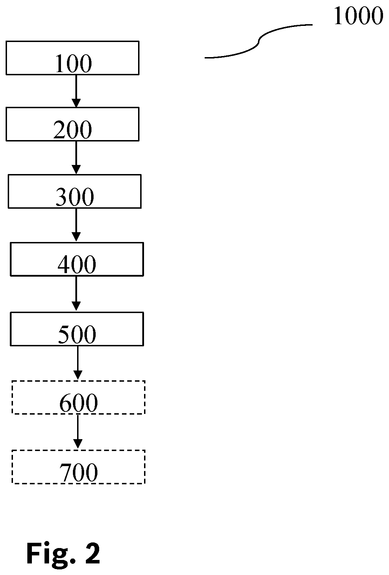

Figure 2 shows a flow chart of another exemplary embodiment of the method for assigning a semantic concept to a previously unseen/unknown/new data asset. In step 100, enriched metadata are determined from metadata of the data asset by performing at least one enrichment operation. Such enrichment operation comprises, as sub-steps or sub-operations, at least one of: tokenizing the data asset label, expanding acronyms in the metadata, deriving known assignments between (known) data assets and semantic concepts from a knowledge graph and/or external databases, and generating a textual description of the data asset. These sub-steps or sub-operations may be performed depending on the availability of the respective information in the metadata. At least a data asset label shall be available. Optionally, information on at least one of a type of the data asset, a description of the data asset, the data type and/or further context in form of a textual information, may be comprised by the data asset's metadata.

In step 200, a plurality of candidate semantic concepts and corresponding similarity scores is retrieved from a vector database by performing at least one similarity search. This similarity search compares text embeddings of the enriched metadata with text embeddings of candidate semantic-concept descriptors stored in the vector database. In cases where the enriched metadata comprise more than an expanded data asset label, separate similarity searches may be performed based on the semantic concept descriptors and at least the (expanded) data asset label, the determined description, if these information is available, respectively.

In step 300, a first ranking of the candidate semantic concepts is determined based on at least the similarity scores of the at least one similarity search. In cases where several similarity score and, optionally relevance and/or maturity scores are determined, the first ranking may be obtained from weighting the respective scores with predefined weights.

Subsequently, in step 400, at least one second ranking of the candidate semantic concepts is determined by at least one neural network configured for natural language processing. The neural network receives, as input, the first ranking together with the enriched metadata and determines a second ranking.

In step 500, at least one semantic concept is selected and the selected at least one semantic concept together with the data asset label is stored, as a proposed mapping, in the knowledge graph. The selection is based on at least the second ranking. Optionally, before a semantic concept is selected and combined together with the data asset label thereby forming a proposed mapping, an additional neural network for natural language processing may be provided, as input, with the at least one second raking and the enriched metadata and, additionally, a text instruction comprising instructions to the additional neural network for evaluating and potentially reordering the ranking of semantic concepts as provided by the second ranking as an input. The additional neural network may determine a third ranking based on the input. The proposed mapping may be selected from the third ranking.

Alternatively, before selecting at least one semantic concept, in step 500, an overall ranking of the candidate semantic concepts may be determined by a weighted combination of all previously determined scores, comprising the similarity scores, relevance score and maturity score, and based on the determined first ranking and second ranking. In this case, the at least one proposed mapping may be selected based on the overall ranking.

In optional method step 600 a proposed mapping (from step 500) may be provided, together with the (new) data asset, to an IT application. The application may be configured to process data assets according to the associated semantic concept. The (new) data asset may be data of a new sensor or new data source added to a IT system and the application is configured to control the IT system by performing an action or taking a decision. In further optional method step 700, the IT system is controlled by the IT application, taking the information from the new data asset into account.

## Claims

1. A computer-implemented method for assigning a semantic concept to a previously unseen data asset, wherein the data asset comprises metadata comprising at least a data asset label, the method comprising:
- determining enriched metadata by performing at least one enrichment operation, wherein an enrichment operation comprises at least one of: tokenizing the data asset label, expanding acronyms in the metadata, deriving known assignments between (known) data assets and semantic concepts from a knowledge graph and/or external databases, and generating a textual description of the data asset;
- retrieving a plurality of candidate semantic concepts together with corresponding similarity scores by performing at least one similarity search that compares text embeddings of the enriched metadata with text embeddings of candidate semantic-concept descriptors;
- determining a first ranking of the candidate semantic concepts based on at least the similarity scores of the at least one similarity search;
- determining at least one second ranking of the candidate semantic concepts by at least one neural network configured for natural language processing, wherein the at least one neural network receives as input the first ranking together with the enriched metadata and determines a second ranking as output;
- selecting, as a proposed mapping, at least one semantic concept based at least on the at least one second ranking and storing the at least one proposed mapping in the knowledge graph.

2. Method according to claim 1, wherein the metadata of the asset further comprise additional information comprising at least one of an asset type, a textual description of the asset, a data type of the asset, a data source, a data application, a data domain.

3. Method according to claim 2, wherein, depending on the additional information comprised in the metadata, a separate similarity search with corresponding similarity score determination is performed, respectively, for data asset label similarity, textual description similarity, and/or contextual correspondence of the semantic concept.

4. Method according to any of the preceding claims, wherein the textual description of the data asset is determined based on at least one of
- a documentation of the data asset and/or the application that provides the data asset, with the documentation being provided in form of unstructured data in a vector database, and/or
- a search of information in an online database.

5. Method according to any of the preceding claims,
wherein in addition to the similarity scores, at least one of relevance scores and maturity scores are determined,
wherein
- a relevance score is determined using semantic concept metadata by comparing the semantic concept metadata of a candidate semantic concept to the data asset metadata and assigning a higher relevance score to a candidate semantic concept candidate when a data domain associated with the data asset matches a data domain associated with the candidate semantic concept and/or a semantic concept type associated with the data asset matches a semantic concept type associated with the candidate semantic concept.
- a maturity score is determined based on semantic concept metadata related to
(a) a registration status of the candidate semantic concept, wherein a more advanced registration status determines a higher maturity score; or
(b) a scope of usage of the candidate semantic concept, wherein a broader scope of usage results in/determines a higher maturity score; wherein the scope of usage is determined based on at least one of: (i) an organizational level at which the potential semantic concept was suggested, wherein a higher organizational level results in a broader scope of usage; or (ii) a standardization status of the candidate semantic concept, wherein a standardized semantic concept has a broader scope of usage than a non-standardized semantic concept.

6. Method according to any of the preceding claims, wherein the candidate semantic concepts are ranked by determining a weighted combination of the determined similarity scores and, optionally, the optionally determined relevance scores and/or maturity scores.

7. Method according to any of the preceding claims, wherein before a proposed mapping is selected, an additional neural network for natural language processing is provided with the at least one second raking and the enriched metadata and, additionally, a text instruction comprising instructions to the neural network for evaluating and potentially reordering the ranking of semantic concepts as provided by the second ranking as an input, and wherein the additional neural network determines a third ranking based on the input, wherein the proposed mapping is selected from the third ranking.

8. Method according to any of the preceding claims, wherein a semantic concept is added to the first, second or third ranking if a respective overall score exceeds a respective predefined threshold,
wherein the overall score is determined based on the similarity scores and, optionally, the relevance and/or maturity scores.

9. Method according to any of the preceding claims, further comprising the step, before selecting at least one semantic concept:
- determining an overall ranking of the candidate semantic concepts by determining a weighted combination of all previously determined scores, comprising the similarity scores, relevance score and maturity score, and based on the determined ranking first ranking, second ranking and/or third ranking,
wherein the at least one proposed mapping is selected based on the overall ranking.

10. Method according to any of the preceding claims, further comprising the step:
- Providing (600) one proposed mapping together with the data asset to an IT application ,
wherein the IT application is configured to process data assets according to the associated semantic concept,
wherein the data asset is data of a new sensor or new data source added to a IT system,
wherein the application controls the IT system by performing an action or taking a decision
- Controlling (700) the IT system by the IT application.

11. Data processing system, comprising at least one processor configured to perform the method according to any of the claims 1 to 8.

12. Computer program comprising instructions which, when the program is executed by a computer, cause the computer to carry out the method according to any of the claims 1 to 8.

13. Computer-readable data carrier having stored thereon the computer program of claim 10.
